Europäisches Patentamt

European Patent Office

Office européen des brevets

(11) Veröffentlichungsnummer: **0 025 090**
A1

## (12) EUROPÄISCHE PATENTANMELDUNG

(21) Anmeldenummer: **80103479.4**

(22) Anmeldetag: **21.06.80**

(51) Int. Cl.³: **H 04 L 25/03**
H 04 B 3/14, H 03 K 5/01

(30) Priorität: **06.09.79 CH 8038/79**

(43) Veröffentlichungstag der Anmeldung:
**18.03.81 Patentblatt 81/11**

(84) Benannte Vertragsstaaten:
**AT BE DE FR GB IT LU NL SE**

(71) Anmelder: **SIEMENS-ALBIS AKTIENGESELLSCHAFT**
**EGA1/Verträge und Patente Postfach**
**CH-8047 Zürich(CH)**

(72) Erfinder: **Marending, Peter**
**Birmensdorferstrasse 73**
**CH-8902 Urdorf(CH)**

(54) Impulsregenerator.

(57) Es wird ein Impulsregenerator angegeben, der auf ein gewünschtes Frequenzband und eine Leitung mit bestimmter Länge elektronisch umschaltbar ist. In diesem Impulsregenerator sind zwei Leitungsentzerrer mit je einem variablen Entzerrer (VR1, VR2) vorhanden, deren Ausgänge mit den Eingängen von je zwei einschaltbaren Festentzerrern (F11, F12 bzw. F21, F22) gemeinsam verbunden sind. Die Ausgänge dieser vier Festentzerrer sind gemeinsam über einen Verstärker (PA) mit dem Eingang einer Koppelschaltung (KS) verbunden, die als Differenzverstärker ausgebildet sein kann.

EP 0 025 090 A1

./...

FIG.1

SIEMENS-ALBIS AKTIENGESELLSCHAFT       Unser Zeichen

Z ü r i c h                                79P9817

## Impulsregenerator

Die Erfindung betrifft einen Impulsregenerator gemäss dem Oberbegriff des Anspruches 1 oder 2.

Beim Uebertragen von Zeichenelementen über eine Leitung entstehen vielfach Formverzerrungen, zu deren Kompensierung Impulsregeneratoren eingesetzt werden, die für ein gewünschtes Frequenzband und eine bestimmte Leitung geeicht sein müssen. Ein solcher Impulsregenerator kann einen Amplitudenregenerator und einen Entscheider aufweisen. So ist aus der CH-PS 604 440 und aus "Siemens-Albis Berichte", Nr. 1/2, 1977, Seiten 9 bis 17, ein Impulsregenerator mit einem aus einem Leitungsentzerrer und einem Koppelübertrager bestehenden Amplitudenregenerator bekannt, der mit einem aus einem Taktregenerator und einem Formregenerator bestehenden Entscheider verbunden ist, wobei der Taktregenerator einen Schwellwertschalter enthält. Dabei wird dem Eingang eines solchen Impulsregenerators ein verzerrtes Datensignal über einen Eingangsübertrager zugeführt und ein vom Impulsregenerator regeneriertes Ausgangssignal über einen Ausgangsübertrager an eine weitere Leitungsstrecke abgegeben.

In diesem Amplitudenregenerator ist ein variabler Entzerrer vorhanden, dessen Ausgangssignal über einen Verstärker zur Primärwicklung eines Koppelübertragers gelangt, dessen Sekundärwicklung über eine aus einem Spitzendetektor und einem Verstärker bestehende Regelschaltung mit dem Regeleingang des variablen Entzerrers verbunden ist. Der Entscheider ist eingangsseitig ebenfalls an die Klemmen der Sekundärwicklung des Uebertragers angeschlossen. Ferner ist beispielsweise aus der DE-AS 24 32 834 ein variabler Entzerrer bekannt, bei dem ein Feldeffekttransistor als spannungsgesteuerter regelbarer Widerstand vorgesehen ist.

Zur Umschaltung eines solchen Impulsregenerators auf ein gewünschtes Frequenzband und eine bestimmte Leitung ist es möglich, zwei Relais-Umschalter zu verwenden. Dabei kann der Eingangsübertrager primärseitig mit einem ankommenden, gegebenenfalls durch die Leitungsdämpfung

verzerrten Datenempfangssignal beaufschlagt und sekundärseitig über den ersten Relais-Umschalter entweder mit einem ersten Leitungsentzerrer für ein gewünschtes erstes Frequenzband und eine bestimmte erste Leitung oder mit einem zweiten Leitungsentzerrer für ein gewünschtes zweites Frequenzband und eine bestimmte zweite Leitung verbunden werden. Durch den zweiten Relais-Umschalter kann dann wahlweise das Ausgangssignal des ersten oder des zweiten Leitungsentzerrers der Primärwicklung des Koppelübertragers zugeführt werden.

Solche mechanische Relais-Umschalter erweisen sich jedoch als nachteilig in bezug auf ihre Zuverlässigkeit. Ein Zweck der vorliegenden Erfindung ist es nun, einen Impulsregenerator zu schaffen, der für bestimmte Frequenzbänder und Leitungen elektronisch umschaltbar ist.

Ein einen Koppelübertrager aufweisender Amplitudenregenerator erweist sich indessen bei monolithischer Integrierung in sogenannten Chips als nachteilig, da der Koppelübertrager nicht integriert werden kann. Ein weiterer Zweck der vorliegenden Erfindung besteht daher darin, einen Impulsregenerator anzugeben, bei dem kein Koppelübertrager erforderlich und der somit einer Integrierung leichter zugänglich ist.

Die Lösung dieser Aufgaben erfolgt erfindungsgemäss durch die in den kennzeichnenden Teilen der Ansprüche 1 und 2 angegebenen Massnahmen.

Weitere vorteilhafte Ausgestaltungen der Erfindung ergeben sich aus den Unteransprüchen.

Die Erfindung wird nachfolgend durch Beschreibung von Ausführungsbeispielen anhand von Zeichnungen näher erläutert. Dabei zeigen:

Fig. 1 das Blockschaltbild eines erfindungsgemässen umschaltbaren Impulsregenerators,

Fig. 2 das Blockschaltbild eines erfindungsgemässen Impulsregenerators mit einem als Koppelschaltung arbeitenden Differenzverstärker,

Fig. 3 das Blockschaltbild eines Schwellwertschalters für solche Impulsregeneratoren,

Fig. 4 das Blockschaltbild einer erfindungsgemässen Regelschaltung für solche Impulsregeneratoren.

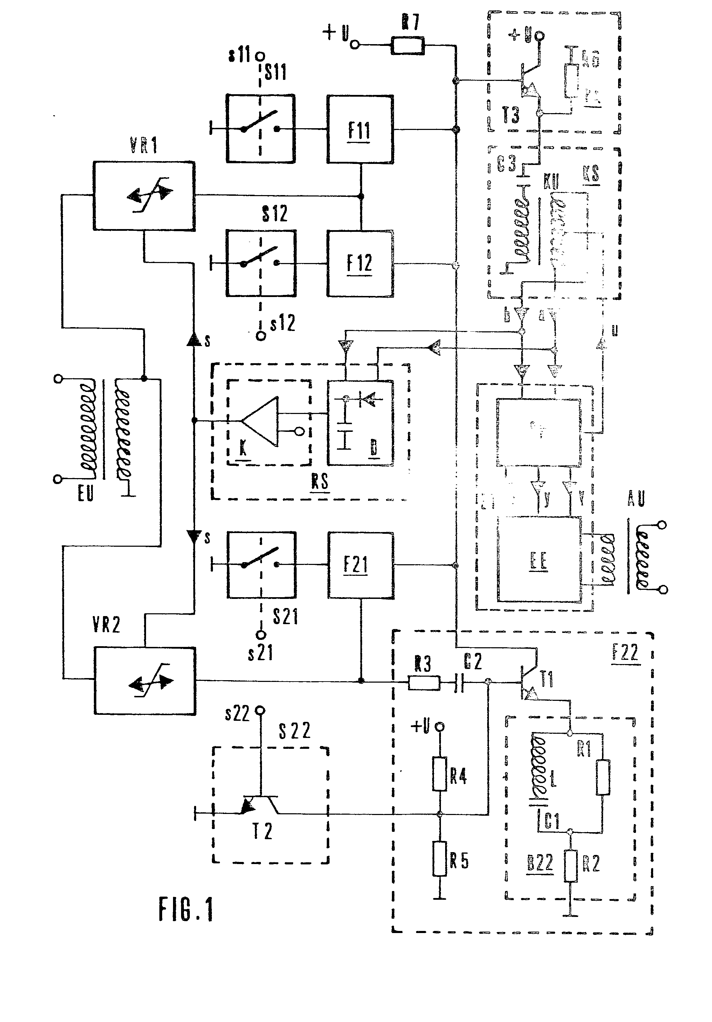

Der in Fig. 1 dargestellte umschaltbare Impulsregenerator weist einen Eingangsübertrager EU auf, dessen Sekundärwicklung mit den Eingängen zweier variabler Entzerrer VR1 und VR2 verbunden ist. Dabei wird das Ausgangssignal des für ein erstes Uebertragungsfrequenzband vorgesehenen Entzerrers VR1 einerseits über einen Festentzerrer F11 für eine grosse Kabellänge und andererseits über einen Festentzerrer F12 für eine kleine Kabellänge und das Ausgangssignal des für ein zweites Uebertragungsfrequenzband vorgesehenen Entzerrers VR2 einerseits über einen Festentzerrer F21 für eine grosse Kabellänge und andererseits über einen Festentzerrer F22 für eine kleine Kabellänge dem Eingang eines Verstärkers PA zugeführt. Die Festentzerrer F11, F12, F21 und F22 weisen je einen Steuer-Eingang auf, der jeweils über einen Schalter S11, S12, S21 bzw. S22 mit einem Bezugspotential verbindbar ist. Dabei werden diese Schalter mit den Signalen s11, s12, s21 bzw. s22 gesteuert.

Der Ausgang des Verstärkers PA ist mit dem Signaleingang einer Koppelschaltung KS verbunden, die zwei Ausgangssignale a und b abgibt, mit denen sowohl eine Regelschaltung RS als auch ein Schwellwertschalter SW beaufschlagt werden, der vier Signale x, y, v und u abgibt, von denen das Signal u als Referenzsignal für die Koppelschaltung KS dient und die Signale x, y und v sämtlichen Eingängen einer Entscheide-Einheit EE zugeführt werden, an die die Primärwicklung eines Ausgangsübertragers AU angeschlossen ist.

Der Ausgang des Festentzerrers F22 ist der Kollektor eines Transistors T1, dessen Emitter über ein Bandpassfilter B22 an das Bezugspotential angeschlossen ist. Dabei kann dieses Bandpassfilter B22 derart aufgebaut sein, dass der Emitter des Transistors T1 einerseits über die Reihenschaltung einer Induktivität L und eines Kondensators C1 und andererseits über einen Widerstand R1 mit der einen Klemme eines Widerstandes R2 verbunden ist, dessen andere Klemme an das Bezugspotential angeschlossen ist.

Die Basis des Transistors T1 ist einerseits über die Reihenschaltung eines Kondensators C2 und eines Widerstandes R3 mit dem Ausgang des variablen Entzerrers VR2 und andererseits mit dem Kollektor eines als Schalter S22 arbeitenden Transistors T2 verbunden und ausserdem über einen Widerstand R4 an die Speisespannung und über einen Widerstand R5 an das Bezugspotential angeschlossen. Die Basis des Transistors T2 ist mit dem Steuersignal s22 beaufschlagt und sein Emitter an das Bezugspotential angeschlossen. Die Festentzerrer F11, F12 und F21 können gleich wie der Festentzerrer F22 aufgebaut sein, jedoch mit anderen Werten für die Bandpassfilter-Charakteristik.

Die das Regelsignal s abgebende Regelschaltung RS weist einen ausgangsseitig mit den Steuereingängen der variablen Entzerrer VR1 und VR2 verbundenen Verstärker K auf, dem ein eine Gleichrichterschaltung und einen Kondensator aufweisender Spitzendetektor D nachgeschaltet ist. Diese Gleichrichterschaltung kann mit einem Doppel- oder Einweggleichrichter aufgebaut sein, wobei bei Verwendung eines Einweggleichrichters nur eines der Eingangssignale a, b des Spitzendetektors D erforderlich ist.

Der Verstärker PA weist einen Transistor T3 auf, dessen Emitter über einen Widerstand R6 an das Bezugspotential und dessen Kollektor an die Speisespannung U angeschlossen ist. Die Koppelschaltung KS weist einen Koppelübertrager KU auf, der primärseitig über einen Kondensator C3 mit dem Emitter des Transistors T3 verbunden ist und sekundärseitig die Signale a und b abgibt. Eine mittlere Anzapfung dieser Sekundärwicklung wird mit dem Referenzsignal u beaufschlagt. Der Kollektor des Transistors T1 und die Basis des Transistors T3 sind gemeinsam über einen Widerstand R7 an die Speisespannung U angeschlossen.

Der umschaltbare Impulsregenerator nach Fig. 1 funktioniert folgendermassen:

Wenn die Steuersignale sij = s11, s12, s21 und s22 sich im Zustand "1" befinden, sind die Schalter S11, S12, S21 und S22 geschlossen, so dass die Festentzerrer F11, F12, F21 und F22 ausser Betrieb sind. Von den Steuersignalen sij kann sich jeweils nur eines im Zustand "0" befinden. Wenn beispielsweise s22 = "0" ist, ist der Transistor T2 gesperrt, d.h. der Schalter S22 offen. In diesem Fall kann der Festentzerrer mit seiner Resonanzfrequenz arbeiten. Somit wird ein amplitudenregeneriertes Signal am Kollektor des Transistors T1 auftreten und über den Verstärker PA, die Koppelschaltung KS, den Schwellwertschalter SW und die Entscheide-Einheit EE zum Ausgangsübertrager AU gelangen. Durch einfaches Kurzschliessen eines der Schalter sij = S11, S12, S21 oder S22 wird daher der umschaltbare Impulsregenerator für die Entzerrung eines Eingangssignals vorbereitet, das auf einem gewünschten Frequenzband liegt und über eine bestimmte Leitung eintrifft.

Ein solcher Impulsregenerator kann ohne weiteres mit mehr Festentzerrern Fij samt Schaltern Sij für verschiedene Längen der Leitungsstrecken und/oder mit mehr variablen Entzerrern VRi = VR1, VR2, ... für verschiedene Frequenzbänder ausgerüstet sein.

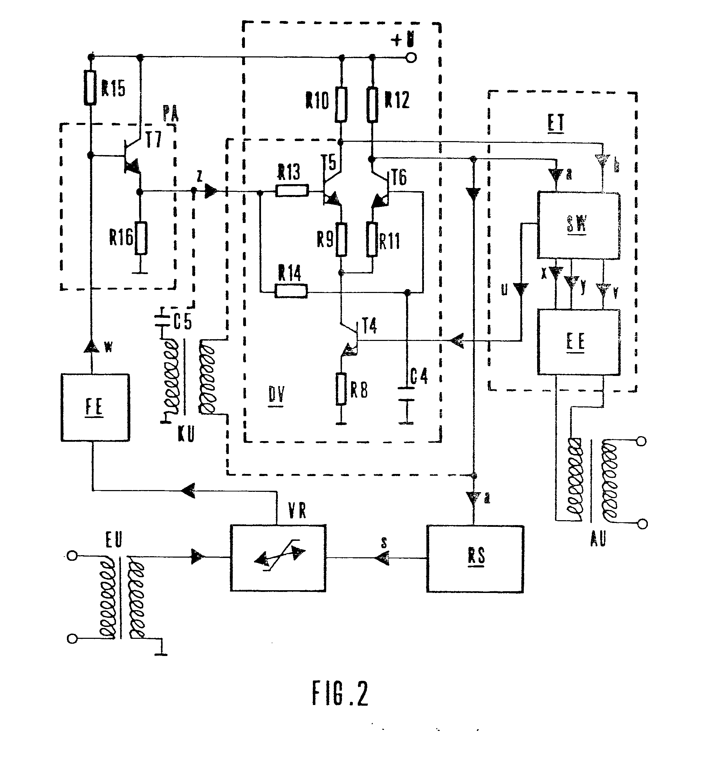

Der in der Figur 2 dargestellte Impulsregenerator weist einen Eingangsübertrager EU auf, der eingangsseitig mit einem über eine Uebertragungsleitung geführten Informationssignal beaufschlagt wird. Der Eingangsübertrager EU ist ausgangsseitig mit dem Signaleingang eines variablen Entzerrers VR verbunden, der beispielsweise ein zweistufiger regelbarer Bode-Entzerrer sein kann und dessen Ausgang über die Reihenschaltung eines Festentzerrers FE und eines Verstärkers PA mit dem Eingang eines als Koppelschaltung arbeitenden Differenzverstärkers DV verbunden ist, der zwei Ausgangssignale a und b abgibt. Ein aus einem Schwellwertschalter SW und einer Entscheide-Einheit EE bestehender Entscheider ET ist eingangsseitig über einen ersten Eingang mit dem Signal a und über einen zweiten Eingang mit dem Signal b beaufschlagt und ausgangsseitig an die Klemmen der Primärwicklung eines Ausgangsübertragers AU angeschlossen. Das Signal a gelangt zudem über eine Regelschaltung RS zum Steuereingang des variablen Entzerrers VR.

Der Schwellwertschalter SW weist einen weiteren Ausgang auf, der ein Signal u abgibt, das der Basis eines als Stromquelle des Differenzverstärkers DV arbeitenden Transistors T4 zugeführt wird, dessen Emitter über einen Widerstand R8 an ein Bezugspotential angeschlossen ist. Der Kollektor des Transistors T4 ist einerseits über die Reihenschaltung eines Widerstandes R9, der Emitter-Kollektorstrecke eines zweiten Transistors T5 sowie eines Widerstandes R10 und andererseits über die Reihenschaltung eines Widerstandes R11, der Emitter-Kollektorstrecke eines dritten Transistors T6 sowie eines Widerstandes R12 an die Speisespannung U angeschlossen. Das Eingangssignal z des Differenzverstärkers DV gelangt einerseits über einen Widerstand R13 zur Basis des Transistors T5 und andererseits über einen Widerstand R14 zur Basis des Transistors T6, die zudem über einen Kondensator C4 ebenfalls an das Bezugspotential angeschlossen ist. Dabei werden die Signale a und b an den Kollektoren der Transistoren T6 bzw. T5 entnommen.

Der ein Signal w abgebende Ausgang des Festentzerrers FE ist einerseits mit der Basis eines Transistors T7 im Verstärker PA und andererseits über einen Widerstand R15 mit dem Kollektor des Transistors T7 verbunden. Dabei ist der Kollektor des Transistors T7 an die Speisespannung U und der das Signal z abgebende Emitter desselben über einen Widerstand R16 an das Bezugspotential angeschlossen. Das Ausgangssignal z des Verstärkers PA kann auch über einen Kondensator C5 und einen Koppelübertrager KU dem Entscheider ET zugeführt werden, wobei dann die eine Klemme der Sekundärwicklung des Koppelübertragers KU mit dem ersten Eingang und die andere Klemme mit dem zweiten Eingang des Entscheiders ET verbunden ist. In diesem Fall entfällt der Differenzverstärker DV.

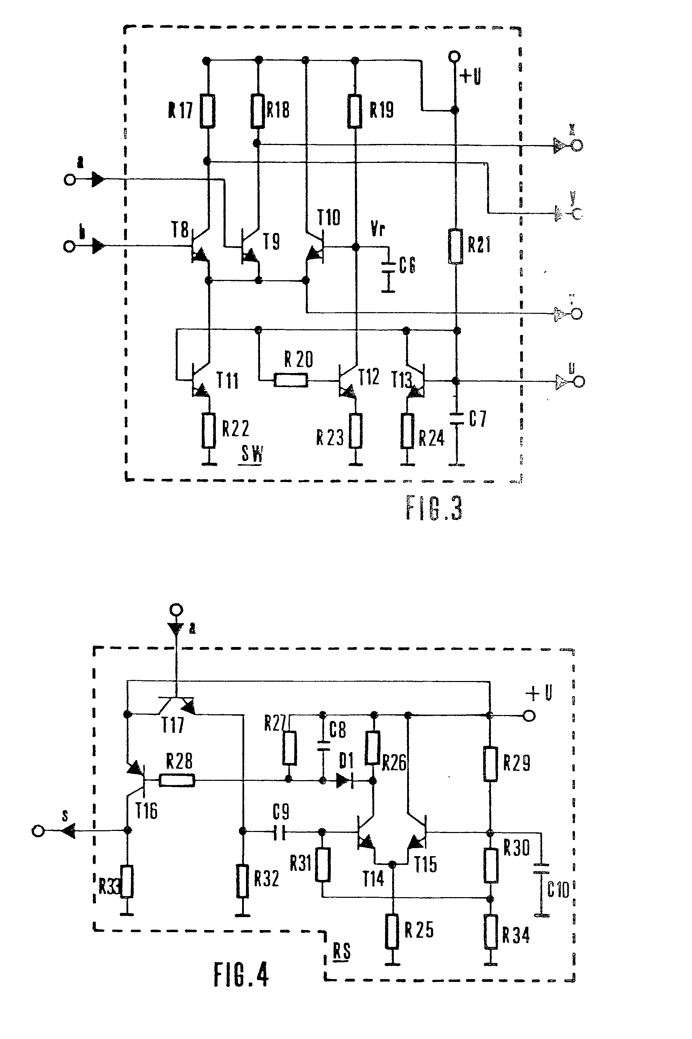

Der Schwellwertschalter SW nach Fig. 3 weist drei Transistoren T8, T9, T10 auf, deren Emitter gemeinsam mit dem Kollektor eines Transistors T11 verbunden sind und das Signal v abgeben, wobei am Kollektor des Transistors T8, welcher über einen Widerstand R17 an die Speisespannung U angeschlossen ist, das Signal y und am Kollektor des Transistors T9, welcher über einen Widerstand R18 an die Speisespannung U angeschlossen ist, das Signal x entnommen wird. Die Basen der Transistoren T9 und T8 sind mit den Signalen a bzw. b beaufschlagt. Die Basis des Transistors T10 ist mit dem Kollektor eines Transistors T12 verbunden und ausserdem einerseits über einen Widerstand R19 an die Speisespannung U und andererseits über einen Kondensator C6 an das Bezugspotential angeschlossen. Die Basis des Transistors T11 ist mit dem Kollektor eines Transistors T13 und über einen Widerstand R20 mit der Basis des Transistors T12 verbunden. Am Kollektor des Transistors T13, welcher mit der Basis desselben kurzgeschlossen ist, wird das Signal u entnommen. Der Kollektor des Transistors T13 ist zudem über einen Widerstand R21 an die Speisespannung U und über einen Kondensator C7 an das Bezugspotential angeschlossen. Die Emitter der Transistoren T11, T12 und T13 sind ebenfalls über je einen Widerstand R22, R23 und R24 an das Bezugspotential angeschlossen.

Der Impulsregenerator nach den Figuren 2 und 3 funktioniert folgendermassen:

Das erforderlichenfalls über den Verstärker PA vorverstärkte Ausgangssignal w des Festentzerrers FE (Fig. 2) wird dem Eingang des Differenzverstärkers DV zugeführt, dessen Ausgangssignal a das verstärkte sogenannte Augensignal und dessen Ausgangssignal b ein zum Signal a invertiertes Signal ist. Der nachgeschaltete Schwellwertschalter SW (Fig. 3) verwandelt die analogen Eingangssignale a und b in digitale Ausgangssignale x und y. Wenn die Signale a und b als NULL-Signale ankommen, dann gilt a = b = Va Volt. Da für die Referenzspannung Vr an der Basis des Transistors T10 (Fig. 3) die Beziehung VR≻Va gilt, ist der Transistor T10 leitend und die Transistoren T8 und T9 sperren. Demzufolge liegen die Ausgänge für die Signale x und y auf dem Potential U Volt, d.h. die Signale x und y sind im Zustand "1". Wenn das Signal a im Zustand "1" ist, ist a = Va + Vs, so dass der Transistor T9 leitet, wodurch das Signal x = "0" ist. Wenn das Signal b im Zustand "1" ist, ist b = Va + Vs, so dass der Transistor T8 leitet, wodurch das Signal y = "0" ist. An den Emittern der drei Transistoren T8, T9 und T10 steht ein Ausgangssignal v zur Anregung des Schwingkreises der Entscheide-Einheit EE zur Verfügung. Für die Amplitude des Signals v gilt v = Vs/2.

Am Kollektor des Transistors T13 stellt sich eine durch den Kondensator C7 abgeblockte Spannung u ein, die als Referenzspannung den Basen der Transistoren T4 (Fig. 2) und T12 (Fig. 3) zugeführt wird. Dies ist wichtig, damit unabhängig von Spannungs- und Temperaturschwankungen der Kollektorstrom des Transistors T4 im Schwellwertschalter SW proportional zum Kollektorstrom des Transistors T12 im Differenzverstärker DV sein kann. Die Basis des Transistors T11 kann vorzugsweise ebenfalls an die Referenzspannung u angeschlossen sein.

Als Regelschaltung RS kann auch die in Fig. 4 dargestellte Schaltung eingesetzt werden, bei der die Emitter zweier Transistoren T14 und T15 gemeinsam über einen Widerstand R25 an das Bezugspotential angeschlossen sind. Der Kollektor des Transistors T14 ist einerseits über einen Widerstand R26 mit dem Kollektor des Transistor T15 und mit der Spannungsquelle U und andererseits mit der Kathode einer Diode D1 verbunden, deren Anode einerseits über die Parallelschaltung eines Kondensators C8 und eines Widerstandes R27 mit der Spannungsquelle U und andererseits über einen Widerstand R28 mit der Basis eines Transistors T16 verbunden ist. Dabei ist die Basis des Transistors T15 über einen Widerstand R29 an die Speisespannung angeschlossen und zwischen den Basen der Transistoren T15 und T14 die Reihenschaltung zweier Widerstände R30 und R31 und zwischen der Basis des Transistors T14 und dem Emitter eines Transistors T17 ein Kondensator C9 eingefügt. Der Kollektor dieses Transistors T17 ist ebenfalls an die Speisespannung angeschlossen.

Ferner ist einerseits der Emitter des Transistors T17 über einen Widerstand R32 und der Kollektor des Transistors T16 über die Parallelschaltung eines Widerstandes R33 und ggf. eines Kondensators und andererseits die Basis des Transistors T15 über einen Kondensator C10 und über die Reihenschaltung des Widerstandes R30 und eines Widerstandes R34 an das Bezugspotential angeschlossen. Der Emitter des Transistors T16 ist mit der Speisespannung und die Basis des Transistors T17 mit dem Ausgangssignal a der Koppelschaltung KS beaufschlagt. Am Kollektor des Transistors T16 wird das Regelsignal s entnommen.

Die Regelschaltung nach Fig. 4 funktioniert folgendermassen:

Das Signal a wird über den als Impedanzwandler arbeitenden Transistor T17 und den Kondensator C9 zur Basis des Transistors T14 geführt, der zusammen mit dem Transistor T15 eine Komparatorstufe bildet, in der das Signal a mit der Spannung an der Basis des Transistors T15 verglichen wird, da die Widerstände R29, R30 und R34 einen Spannungsteiler bilden. Am Kollektor des Transistors T14 steht die Regelspannung zur Verfügung, die vom Transistor T16 verstärkt wird. Die Diode D1 dient zur Spitzenwertmessung. Der Kondensator C8 kann sich nicht über den Widerstand R26 entladen. Da der Wert des Widerstandes R27 viel grösser als der Wert des Widerstandes R26 ist, wird die Ladezeitkonstante viel kleiner als die Entladezeitkonstante. Es ist nämlich wichtig, dass die Regelschaltung den Spitzenwert, und nicht den Mittelwert des Augensignals misst. Da die Eingangssignale zwischen 11111111 und 10001000 liegen, würde bei Messung des Mittelwertes die Augenamplitude als Funktion der momentanen Anzahl Einsen pro Zeiteinheit variieren. Mit der am Kollektor des Transistors T16 erhaltenen Spannung werden die als regelbare Widerstände arbeitenden Feldeffekttransistoren der variablen Entzerrer VR oder VR1 und VR2 geregelt.

Der Verstärker PA, der Schwellwertschalter SW, die Entscheide-Einheit EE, die Regelschaltung RS und der Ausgangsübertrager AU des umschaltbaren Impulsregenerators nach Fig. 1 können auch gleich aufgebaut sein wie die entsprechenden, in den Figuren 2 bis 4 dargestellten Einheiten, wobei als Koppelschaltung KS ein Differenzverstärker DV nach Fig. 2 eingesetzt werden kann.

Patentansprüche

1. Impulsregenerator mit einem Entscheider, einer Koppelschaltung und mindestens einem Leitungsentzerrer, dadurch gekennzeichnet, dass zur Umschaltung des Impulsregenerators auf ein gewünschtes Frequenzband und eine bestimmte Leitung in jedem Leitungsentzerrer ein variabler Entzerrer vorhanden ist, dessen Ausgang gemeinsam mit den Eingängen einer Anzahl von je über einen Schalter einschaltbaren Festentzerrer verbunden ist, wobei die Ausgänge dieser Festentzerrer (Fij) gemeinsam mit dem Eingang der dem Entscheider (ET) vorgeschalteten Koppelschaltung (KS verbunden sind.

2. Impulsregenerator mit einer Koppelschaltung, welche mindestens einen Leitungsentzerrer mit einem Entscheider verbindet, dadurch gekennzeichnet, dass die Koppelschaltung als Differenzverstärker ausgebildet ist, dessen Ausgangssignale (a,b) je einem Eingang eines im Entscheider enthaltenen Schwellwertschalters (SW) zugeführt sind, der ein zusätzliches Steuersignal (u) abgibt, welches die Stromquelle (T4) des Differenzverstärkers (DV) steuert, und dass eines der Ausgangssignale (a) des Differenzverstärkers (DV) über eine Regelschaltung (RS) dem Steuereingang eines im Leitungsentzerrer enthaltenen variablen Entzerrers (VR) zugeführt ist.

3. Impulsregenerator nach Patentanspruch 1 oder 2, dadurch gekennzeichnet, dass die Eingänge mehrerer in den Leitungsentzerrern enthaltener variabler Entzerrer mit dem Ausgang ein und derselben Regelschaltung (RS) verbunden sind.

4. Impulsregenerator nach Patentanspruch 3, dadurch gekennzeichnet, dass das Eingangssignal der Regelschaltung (RS) der Basis eines ersten Transistors (T14) zugeführt wird, dessen Kollektor einerseits über einen ersten Widerstand (R26) mit dem Kollektor eines zweiten Transistors (T15) und mit der Spannungsquelle (U) und andererseits mit der Kathode einer Diode (D1) verbunden ist, deren Anode über die Parallelschaltung eines Kondensators (C8) und eines zweiten Widerstandes (R27) an die Spannungsquelle (U) angeschlossen ist, wobei die Emitter beider Transistoren (T14, T15) über einen dritten Widerstand (R25) und die Basis des zweiten Transistors (T15) einerseits über einen zweiten Kondensator (C10) und andererseits über die Reihenschaltung eines vierten und eines fünften Widerstandes (R30, R34) an ein Bezugspotential angeschlossen sind, dass ferner die Basis des zweiten Transistors (T15) einerseits über einen sechsten Widerstand (R29) mit der Spannungsquelle (U) und andererseits über die Reihenschaltung des vierten und eines siebten Widerstandes (R30, R31) mit der Basis des ersten Transistors verbunden ist, und dass das Ausgangssignal der Regelschaltung (RS) an der Anode der Diode (D1) entnommen wird.

5. Impulsregenerator nach einem der vorangehenden Patentansprüche, dadurch gekennzeichnet, dass die Ausgänge der Leitungsentzerrer gemeinsam mit dem Eingang eines der Koppelschaltung (KS; DV) vorgeschalteten Verstärkers (PA) verbunden sind.

FIG.1

79P9817 0025090

FIG.2

FIG.3

FIG.4

Europäisches
Patentamt

# EUROPÄISCHER RECHERCHENBERICHT

| | EINSCHLÄGIGE DOKUMENTE | | | KLASSIFIKATION DER ANMELDUNG (Int Cl ) |
|---|---|---|---|---|
| Kategorie | Kennzeichnung des Dokuments mit Angabe, soweit erforderlich, der maßgeblichen Teile | | betrifft Anspruch | |
| | | | | |
| | AT - B - 313 984 (KRONE) | | 1,2 | H 04 L 25/03 |
| | + Seite 2, Zeile 58 - Seite 3, Zeile 20; Seite 7, Zeilen 29-47; Fig. 3 + | | | H 04 B 3/14 |
| | | | | H 03 K 5/01 |
| | -- | | | |
| D | CH - A - 604 440 (SIEMENS-ALBIS) | | 1,2 | |
| | + Spalte 1, Zeilen 1-49; Spalte 2, Zeile 54 - Spalte 3, Zeile 39; Fig. 1,2 + | | | |
| | | | | RECHERCHIERTE SACHGEBIETE (Int Cl ) |
| | -- | | | |
| | GB - A - 1 421 920 (FUJITSU) | | 1,4 | |
| | + Seite 1, Zeile 5 - Seite 2, Zeile 33; Seite 4, Zeile 30 - Seite 5, Zeile 29; Fig. 1,6 + | | | H 04 L 25/00 |
| | | | | H 04 B 3/00 |
| | -- | | | H 03 K 5/00 |
| | GB - A - 1 411 668 (WESTERN ELECTRIC) | | 1,4 | |
| | + Seite 2, Zeilen 56-76; Fig. 1 + | | | |
| | -- | | | |
| D | DE - B2 - 2 432 834 (WESTERN ELECTRIC) | | 1,4 | |
| | + Spalte 2, Zeile 51 - Spalte 3, Zeile 13; Spalte 7, Zeile 12 - Spalte 8, Zeile 29; Fig. 4,6 + | | | KATEGORIE DER GENANNTEN DOKUMENTE |
| | ---- | | | X: von besonderer Bedeutung <br> A: technologischer Hintergrund <br> O: nichtschriftliche Offenbarung <br> P. Zwischenliteratur <br> T der Erfindung zugrunde liegende Theorien oder Grundsätze <br> E: kollidierende Anmeldung <br> D: in der Anmeldung angefuhrtes Dokument <br> L: aus andern Grunden angefuhrtes Dokument <br> &: Mitglied der gleichen Patent- familie, übereinstimmendes Dokument |
| X | . Der vorliegende Recherchenbericht wurde fur alle Patentansprüche erstellt. | | | |
| Recherchenort | | Abschlußdatum der Recherche | Prufer | |
| WIEN | | 10-12-1980 | HAJOS | |

EPA form 1503.1   06.78